(19) **Europäisches Patentamt / European Patent Office / Office européen des brevets**

(11) **EP 4 596 285 A1**

(12) **EUROPEAN PATENT APPLICATION**

(43) Date of publication:
06.08.2025 Bulletin 2025/32

(21) Application number: 25155416.8

(22) Date of filing: 31.01.2025

(51) International Patent Classification (IPC):
B60K 6/442 (2007.10)        B60K 6/52 (2007.10)
B60W 10/08 (2006.01)        B60W 10/11 (2012.01)
B60W 20/30 (2016.01)        B60W 50/08 (2020.01)
B60K 1/02 (2006.01)         B60K 6/547 (2007.10)
B60K 1/00 (2006.01)

(52) Cooperative Patent Classification (CPC):
B60K 6/52; B60K 1/02; B60K 6/442; B60K 6/547;
B60W 10/08; B60W 10/11; B60W 20/30;
B60W 30/182; B60W 50/082; B60K 2001/001;
B60W 2510/081; B60W 2510/1005;
B60W 2520/403; B60W 2552/05; B60W 2710/083;
(Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.02.2024 CN 202410154414

(71) Applicant: BYD Company Limited
Shenzhen, Guangdong 518118 (CN)

(72) Inventors:
• SHEN, Tao
  Shenzhen, 518118 (CN)
• YANG, Dongsheng
  Shenzhen, 518118 (CN)
• ZHU, Futang
  Shenzhen, 518118 (CN)
• GU, Hongpeng
  Shenzhen, 518118 (CN)

(74) Representative: Mathys & Squire
The Shard
32 London Bridge Street
London SE1 9SG (GB)

(54) **CONTROL METHOD FOR FOUR-WHEEL DRIVE VEHICLE, VEHICLE, CONTROLLER, AND STORAGE MEDIUM**

(57) The present disclosure relates to a control method for a four-wheel drive vehicle, a vehicle, a controller, and a storage medium. The control method includes: travel road information and/or a driving mode of the four-wheel drive vehicle is obtained; and a gear of a rear drive of the four-wheel drive vehicle is controlled based on the travel road information and/or the driving mode, where in different gears, a rear axle drive motor of the four-wheel drive vehicle outputs different torques. According to the control method for a four-wheel drive vehicle, the vehicle, the controller, and the storage medium, automatic gear switching can be performed, to automatically control an output torque of the rear axle drive motor and improve dynamics and handling stability of a vehicle. In this way, the four-wheel drive vehicle can better respond to a driving requirement for a special travel road, and driving experience of the four-wheel drive vehicle is improved.

Obtain information about a road on which a vehicle travels

↓

Obtain a user requirement and a vehicle status

↓

Arbitration between the information about the road and the user requirement

↓

Determine a target switched gear

↓

Perform gear switching based on the vehicle status

FIG. 3

(52) Cooperative Patent Classification (CPC): (Cont.)
    B60W 2710/1005

**Description**

<u>FIELD</u>

The present disclosure relates to the field of vehicle control technologies, and specifically, to a control method for a four-wheel drive vehicle, a vehicle, a controller, and a storage medium.

<u>BACKGROUND</u>

With the rapid development of new energy vehicles, hybrid vehicles are also being developed. Consumers have increasingly higher demands on power configurations and performance of the hybrid vehicles, and four-wheel drive systems are gradually applied to the hybrid vehicles.

Compared with conventional two-wheel drive vehicles, the four-wheel drive vehicles are better at dynamics and operating stability, and can be better suited for the hybrid vehicles.

<u>SUMMARY</u>

An objective of the present disclosure is to provide a control method for a four-wheel drive vehicle, a vehicle, a controller, and a storage medium. The control method for a four-wheel drive vehicle, the vehicle, the controller, and the storage medium can control an output torque of a rear axle drive motor through gear switching, and further improve dynamics and handling stability of a vehicle, so that the four-wheel drive vehicle can better respond to driving requirements for a special travel road, and driving experience of the four-wheel drive vehicle is improved.

To achieve the foregoing objective, according to a first aspect, the present disclosure provides a control method for a four-wheel drive vehicle. The control method includes:

travel road information and/or a driving mode of the four-wheel drive vehicle is obtained; and
a gear of a rear drive of the four-wheel drive vehicle is controlled based on the travel road information and/or the driving mode, where in different gears, a rear axle drive motor of the four-wheel drive vehicle outputs different torques.

In an embodiment, the gear of the rear drive of the four-wheel drive vehicle includes: a first gear, a second gear, and a third gear.

The rear axle drive motor outputs no torque in the first gear, and a torque output by the rear axle drive motor in the second gear is less than a torque output by the rear axle drive motor in the third gear.

In an embodiment, the travel road information is used for indicating a travel road type of the four-wheel drive vehicle, and that a gear of a rear drive of the four-wheel drive vehicle is controlled based on the travel road information includes:

a target gear is determined from a second gear and a third gear if the travel road type matches a target travel road type, and the gear of the rear drive of the four-wheel drive vehicle is controlled to be the target gear.

A torque output by the rear axle drive motor in the second gear is less than a torque output by the rear axle drive motor in the third gear.

In an embodiment, that a target gear is determined from a second gear and a third gear includes:

the second gear is determined as the target gear if the target travel road type is snow or mud; or

the third gear is determined as the target gear if the target travel road type is any one of sand, mountains, and rocks.

In an embodiment, that a gear of a rear drive of the four-wheel drive vehicle is controlled based on the driving mode includes:

a second gear is determined as a target gear if the driving mode is a sport mode. A torque output by the rear axle drive motor in the second gear is less than a preset torque.

In an embodiment, the travel road information is used for indicating a travel road type of the four-wheel drive vehicle, and that a gear of a rear drive of the four-wheel drive vehicle is controlled based on the travel road information and the driving mode includes:

a target gear is determined from a first gear and a second gear if the travel road type does not match a target travel road type, and the driving mode is an energy saving mode or a standard driving mode, and the gear of the rear drive of the four-wheel drive vehicle is controlled to be the target gear.

The rear axle drive motor outputs no torque in the first gear, and a torque output by the rear axle drive motor in the second gear is less than a preset torque.

In an embodiment, the control method further includes:

a first vehicle electric drive loss power of the four-wheel drive vehicle is determined in the first gear; and
a second vehicle electric drive loss power of the four-wheel drive vehicle is determined in the second gear.

That a target gear is determined from a first gear and a second gear includes:
the target gear is determined from the first gear and the second gear based on the first vehicle electric drive loss power and the second vehicle electric drive loss power.

In an embodiment, that a first vehicle electric drive loss power of the four-wheel drive vehicle is determined in the first gear includes:
the first vehicle electric drive loss power is determined based on front axle information and a vehicle motor drive-required torque. The front axle information includes: a rotational speed of the front axle drive motor, efficiency of the front axle drive motor, and a reduction ratio of a front axle.

In an embodiment, that a second vehicle electric drive loss power of the four-wheel drive vehicle is determined in the second gear includes:
the second vehicle electric drive loss power is determined based on front axle information, rear axle information, a torque requirement ratio, and a vehicle motor drive-required torque. The front axle information includes: a rotational speed of the front axle drive motor, efficiency of the front axle drive motor, and a reduction ratio of a front axle. The rear axle information includes: a rotational speed of a rear axle drive motor, efficiency of the rear axle drive motor, and a reduction ratio of a rear axle. The torque requirement ratio is a ratio of a torque allocated to the front axle drive motor to the vehicle motor drive-required torque.

In an embodiment, that the target gear is determined from the first gear and the second gear based on the first vehicle electric drive loss power and the second vehicle electric drive loss power includes:

the second gear is determined as the target gear if the first vehicle electric drive loss power is greater than the second vehicle electric drive loss power; or

the first gear is determined as the target gear if the first vehicle electric drive loss power is less than or equal to the second vehicle electric drive loss power.

In an embodiment, that the target gear is determined from the first gear and the second gear based on the first vehicle electric drive loss power and the second vehicle electric drive loss power includes:
the target gear is determined from the first gear and the second gear based on the first vehicle electric drive loss power, the second vehicle electric drive loss power, a maximum output torque of a front axle drive motor, and a vehicle motor drive-required torque.

In an embodiment, that the target gear is determined from the first gear and the second gear based on the first vehicle electric drive loss power, the second vehicle electric drive loss power, a maximum output torque of a front axle drive motor, and a vehicle motor drive-required torque includes:

the first gear is determined as the target gear if the first vehicle electric drive loss power is less than or equal to the second vehicle electric drive loss power, and the vehicle motor drive-required torque and the maximum output torque of the front axle drive motor satisfy a preset relationship; or

the second gear is determined as the target gear if the first vehicle electric drive loss power is greater than the second vehicle electric drive loss power, and the vehicle motor drive-required torque and the maximum output torque of the front axle drive motor do not satisfy a preset relationship.

In an embodiment, the preset relationship is any one of the following:

the vehicle motor drive-required torque is less than or equal to the maximum output torque of the front axle drive motor; or

the vehicle motor drive-required torque is less than or equal to a difference between the maximum output torque of the front axle drive motor and a preset torque. The preset torque is a torque required when a drive motor is switched.

In an embodiment, the travel road information is used for indicating a travel road type of the four-wheel drive vehicle, and that a gear of a rear drive of the four-wheel drive vehicle is controlled based on the travel road information and the driving mode includes:
a second gear is determined as a target gear if the travel road type does not match a target travel road type, and the driving mode is a sport mode, and the gear of the rear drive of the four-wheel drive vehicle is controlled to be the target gear. A torque output by the rear axle drive motor in the second gear is less than a preset torque.

In an embodiment, that travel road information and/or a driving mode of the four-wheel drive vehicle is obtained includes:

vehicle status information of the four-wheel drive vehicle is obtained;

first information input by a user is obtained, the first information including: at least one piece of required driving mode information, required travel road information, and required torque information;

second information collected by an information collection apparatus is obtained, the second information including: a travel road image and/or the travel road type; and

the travel road information and/or the driving mode is determined based on at least one piece of the vehicle status information, the first information, and the second information.

In an embodiment, that the travel road information and/or the driving mode is determined based on at least one piece of the vehicle status information, the first information, and the second information includes:

the travel road information is determined based on the travel road image, the travel road type, the required travel road information, and a required torque; and

the driving mode is determined based on the required driving mode and the required torque.

According to a second aspect, the present disclosure provides a controller, including:

a memory, having a computer program stored therein; and

a processor, configured to execute the computer program in the memory, to enable the controller to perform the control method for a four-wheel drive vehicle according to the first aspect.

According to a third aspect, the present disclosure provides a vehicle, including: the controller according to the second aspect.

According to a fourth aspect, the present disclosure provides a computer-readable storage medium, having computer program instructions stored therein. The program instructions, when executed by a processor, implement the control method for a four-wheel drive vehicle according to the first aspect.

Through the foregoing technical solution, gear shift control of a four-wheel drive vehicle is correspondingly added based on an increase of gears of a rear drive of the four-wheel drive vehicle, and gears of a rear axle motor are automatically controlled based on a road on which a vehicle travels and/or a driving mode of the vehicle, so that handling stability of the vehicle can be improved, and a problem of a slow switching response caused by manual operation by a driver can be reduced. In addition, in different gears, the rear axle drive motor can output different torques, improving dynamics of the vehicle, so that the four-wheel drive vehicle can better respond to a driving requirement for a special travel road, thereby improving driving experience of the four-wheel drive vehicle.

Other features and advantages of the present disclosure are described in detail in the following detailed description.

## BRIEF DESCRIPTION OF THE DRAWINGS

The accompanying drawings are provided to further understand the present disclosure, and constitute a part of the specification. The accompanying drawings, along with specific implementations below, are used to explain the present disclosure, and do not constitute a limitation on the present disclosure. In the drawings:

FIG. 1 is a flowchart of a control method for a four-wheel drive vehicle according to an exemplary embodiment;

FIG. 2 is a schematic architectural diagram of a hybrid system according to an exemplary embodiment;

FIG. 3 is a flowchart of control of a four-wheel drive vehicle according to an exemplary embodiment;

FIG. 4 is a schematic diagram of a relationship between a vehicle speed and a torque according to an exemplary embodiment;

FIG. 5 is a block diagram of a control apparatus for a four-wheel drive vehicle according to an exemplary embodiment; and

FIG. 6 is a schematic block diagram of functions of a vehicle according to an exemplary embodiment.

## DETAILED DESCRIPTION

The following describes the specific implementations of the present disclosure in detail with reference to the accompanying drawings. It should be understood that the specific implementations described herein are merely used to describe and explain the present disclosure, but are not intended to limit the present disclosure.

In the present disclosure, in a case that no opposite description is provided, orientation terms such as "upper, lower, left, right, front, and rear" are only for convenience of describing the present disclosure and simplifying description, but does not indicate or imply that the mentioned apparatus or element needs to have a particular direction and be constructed and operated in the particular direction, and therefore cannot be understood as a limitation on the present disclosure.

As described in the background, the four-wheel drive vehicles are better at dynamics and operating stability, and can be better suited for the hybrid vehicles.

First, compared with the conventional two-wheel drive vehicles, the four-wheel drive vehicles are greatly improved in the dynamics and the operating stability, but are still at a disadvantage in economy. Moreover, a motor is generally in transmission connection to a drive wheel by using only a speed reducer with a fixed transmission ratio. Although a user requirement can be basically satisfied on an ordinary road with non-special terrain, for all terrains, off-road conditions, requirements of escaping from danger, and the like, high-torque dynamics and passability requirements cannot be satisfied. In addition, when the vehicle enters a special terrain mode, a conventional driving mode is mainly manually switched by a driver. Because a travel road condition is complex in this case, the driver responds slowly for observing and performing manual switching, and is prone to be distracted and may be in danger.

Therefore, a rear axle motor of a hybrid four-wheel drive vehicle in the related art is in transmission connection to the drive wheel by using only the speed reducer with the fixed transmission ratio. In other words, the rear axle motor in the related art generally corresponds to only one drive gear, so that an output torque of the rear axle motor is not adjustable. In addition, in an operating condition with a low power requirement such as an ordinary road in a city, little or no torque allocation of the rear axle motor may cause low operating efficiency, a drag torque (a torque generated due to rotation of a motor driven by a rear wheel), electrical losses, and the like. Moreover, in cases of the all terrains, the off-road operating conditions, and the requirements of escaping from danger, a high-torque power requirement of a user cannot be satisfied.

Based on this, the embodiments of the present disclosure provide a technical solution. In the technical solution, gear shift control of the four-wheel drive vehicle is correspondingly added based on an increase of gears of the rear drive of the four-wheel drive vehicle, and the gear of the rear axle motor is automatically controlled based on a road on which the vehicle travels and/or a driving mode of the vehicle, so that different torques can be output by the rear axle motor in different gears. Therefore, based on a controllable torque of the rear axle motor, economy, handling stability, and a battery range of a vehicle can be improved, and the risk of distraction of the driver during driving is reduced. In addition, the technical solution can be used for power requirements of special terrain modes, providing good driving experience for the user.

The technical solutions provided in the embodiments of the present disclosure may be applied to a four-wheel drive vehicle, and the four-wheel drive vehicle may be a hybrid vehicle. For example, the technical solutions provided in the embodiments of the present disclosure may be used for gear control on a hybrid electric four-wheel drive vehicle. The hybrid electric four-wheel drive vehicle may be a hybrid four-wheel drive vehicle, a range-extended hybrid four-wheel drive vehicle, or a pure electric four-wheel drive vehicle, which is not limited in the embodiments of the present disclosure. In addition, it should be understood that the hybrid electric four-wheel drive vehicle may include a front axle drive assembly and a rear axle drive assembly. The front axle drive assembly may include an engine, a generator, a front drive motor, and a transmission. The front drive motor may be a single-gear drive motor. The rear axle drive assembly may include a rear drive motor and a two-gear transmission, and the rear drive motor may be a P4 drive motor.

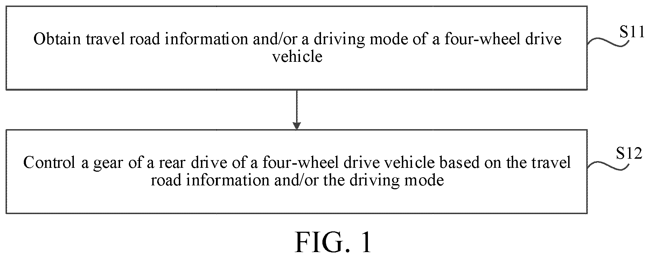

FIG. 1 is a flowchart of a control method for a four-wheel drive vehicle according to an exemplary embodiment. The control method includes the following steps.

Step S11: Travel road information and/or a driving mode of a four-wheel drive vehicle is obtained.

Step S12: A gear of a rear drive of a four-wheel drive vehicle is controlled based on the travel road information and/or the driving mode.

In step S12, in different gears, a rear axle drive motor of the four-wheel drive vehicle outputs different torques.

The travel road information may be information about a road on which the four-wheel drive vehicle currently travels; or may be information about a road on which the four-wheel drive vehicle is to travel.

In the embodiments of the present disclosure, the travel road information may include (or indicate) a travel road type of the four-wheel drive vehicle, that is, a type of a road on which the four-wheel drive vehicle travels.

For example, the travel road type may include: urban roads, snow, sand, mountains, mud, wades, rock, and the like. The urban road may be understood as a non-special road type; and the snow, sand, mountains, mud, wades, and rocks may be understood as special road types.

The driving mode may be a driving mode currently used by the four-wheel drive vehicle; or may be a driving mode required by the user.

In the embodiments of the present disclosure, the driving mode of the four-wheel drive vehicle may include: an energy saving mode, a standard driving mode, and a sport mode.

The energy saving mode may be referred to as an ecology conservation optimization (ECO) mode. In this mode, through a proper accelerator characteristic and controlling operation of an air conditioning system (only during heating or cooling), fuel economy is improved. When an air conditioner needs to be used, a vehicle system is generally automatically switched back to the ECO mode, to continue to improve fuel efficiency.

The standard driving mode may be referred to as a Normal mode. In this mode, a control feeling of the four-wheel drive vehicle is comfortable and simple. A design objective is to achieve an optimal balance between the fuel economy and power performance without sacrificing the power performance of the vehicle. The Normal mode is suitable for daily driving on the urban roads, because the Normal mode provides balanced performance, and is neither biased toward aggressive acceleration nor excessive comfort.

The sport mode may be referred to as a Sport mode. In this mode, gear shift timing of a transmission and a rotational speed of an engine are optimized, to achieve fast and powerful acceleration. The Sport mode may further change a steering feeling, making the vehicle more suitable for a driving situation requiring an agile response, for example, in a multi-curved mountain road.

In the related art, in different driving modes, an operating state of the rear axle drive motor of the four-wheel drive vehicle generally does not change, which is prone to low operating efficiency of the rear axle drive motor, a drag torque (a torque generated due to rotation of a motor driven by a rear wheel), electrical losses, and the like. In the embodiments of the present disclosure, corresponding gear control may be implemented based on different driving modes, to reduce the drag torque of the motor, the electrical losses, and the like in the related art.

In the embodiments of the present disclosure, the travel road information and/or the driving mode may be obtained in multiple implementations.

In an optional implementation, step S11 includes: vehicle status information of the four-wheel drive vehicle is obtained; first information input by a user is obtained, the first information including: at least one piece of required driving mode information, required travel road information, and required torque information; second information collected by an information collection apparatus is obtained, the second information including: a travel road image and/or the travel road type; and the travel road information and/or the driving mode is determined based on at least one piece of the vehicle status information, the first information, and the second information.

In this implementation, the travel road information and/or the driving mode may be determined based on at least one piece of the vehicle status information, the first information, and the second information.

In some embodiments, if only one piece of information is required, only the one piece of information may be obtained; or if two pieces of information are required, only the two pieces of information may be obtained. In other words, not all three pieces of information need to be obtained.

The vehicle status information may include information such as a vehicle speed and an accelerator status. If the travel road information and/or the driving mode is determined by using only the vehicle status information, this may be considered as fuzzy determining. For example, if the vehicle speed is high (or an accelerator force is large), it may be determined that a type of a road on which the four-wheel drive vehicle travels is the non-special road type. If the vehicle speed is low (or the accelerator force is small), it may be determined that the type of the road on which the four-wheel drive vehicle travels is the special road type.

The first information may include the required driving mode information, the required travel road information, and the required torque information. The first information may be understood as requirement information input by the user. For example, the user may input the first information through an in-vehicle infotainment system.

If the travel road information and/or the driving mode is determined by using only the first information, for example, a required driving mode may be determined as the driving mode; the required travel road information may be determined as the travel road information; and the driving mode and/or the travel road information may be determined based on a required torque.

In some embodiments, if the required torque is medium, the driving mode may be the sport mode, and the travel road information may be the special road type. If the required torque is small, the driving mode may be the energy saving mode, and the travel road information may be the non-special road type. If the required torque is large, the driving mode may be the standard driving mode, and the travel road information may be the non-special road type.

The second information may be understood as information collected by a corresponding information collection apparatus. For example, the travel road image may be collected by a camera. It may be understood that an image feature in the travel road image is extracted by performing image processing on the travel road image, and then the image feature is recognized, to determine a corresponding travel road type. The travel road type may be collected by some positioning devices, and a collecting manner is, for example, latitude and longitude positioning. Through the latitude and longitude positioning, the travel road type can be directly determined. Therefore, in the embodiments of the present disclosure, the travel road information may directly include information about the travel road type, or may include information that can be used for determining the travel road type.

If the travel road information and/or the driving mode is determined based on only the second information, the travel road information may be determined based on the second information because both the travel road image and the travel road type match the travel road information.

For example, a travel road feature is extracted based on the travel road image, and the travel road information is determined based on the travel road feature; or travel road information directly obtained is determined as final travel road information; or final travel road information is determined by integrating travel road information determined based on a travel road feature and travel road information directly obtained.

In some embodiments, if the travel road information and/or the driving mode is determined by using more than two pieces of information, the corresponding travel road information and/or driving mode may be first determined based on one piece of information, respectively. Then, the travel road information and/or the driving modes that are respectively determined based on the multiple pieces of information are integrated, to determine the final travel road information and/or driving mode.

In an optional implementation, that the travel road information and/or the driving mode is determined based on at least one piece of the vehicle status information, the first information, and the second information includes: the travel road information is determined based on the travel road image, the travel road type, the required travel road information, and the required torque; and the driving mode is determined based on the required driving mode and the required torque.

In this implementation, the travel road information may be determined based on the travel road image, the travel road type, the required travel road information, and the required torque; and the driving mode may be determined based on the required driving mode and the required torque.

For example, a type of travel road information may be determined based on the travel road image; the travel road type is determined as a type of travel road information; the required travel road information is determined as a type of travel road information; and a type of travel road information may further be determined based on the required torque. Then, whether at least two types of consistent travel road information exist in the four types of travel road information is determined, and if yes, the at least two types of consistent travel road information are determined as the final travel road information; or if not, the required travel road information may be determined as the final travel road information.

For example, the required driving mode may be used as a driving mode; and a driving mode may be determined based on the required torque. Then, whether the two driving modes are consistent is determined, and if yes, either driving mode is determined as the final driving mode; or if not, the driving mode determined based on the required torque may be determined as the final driving mode.

In the embodiments of the present disclosure, the travel road information and/or the driving mode can be determined based on at least one type of information; and the at least one type of information is easy to obtain, so that the travel road information and/or the driving mode can be quickly and accurately determined.

In step S12, the gear of the rear drive of the four-wheel drive vehicle is controlled based on the travel road information and/or the driving mode.

In some embodiments, a target gear may be first determined from multiple gears of the four-wheel drive vehicle based on the travel road information and/or the driving mode, and the gear of the rear drive of the four-wheel drive vehicle is controlled to be the target gear.

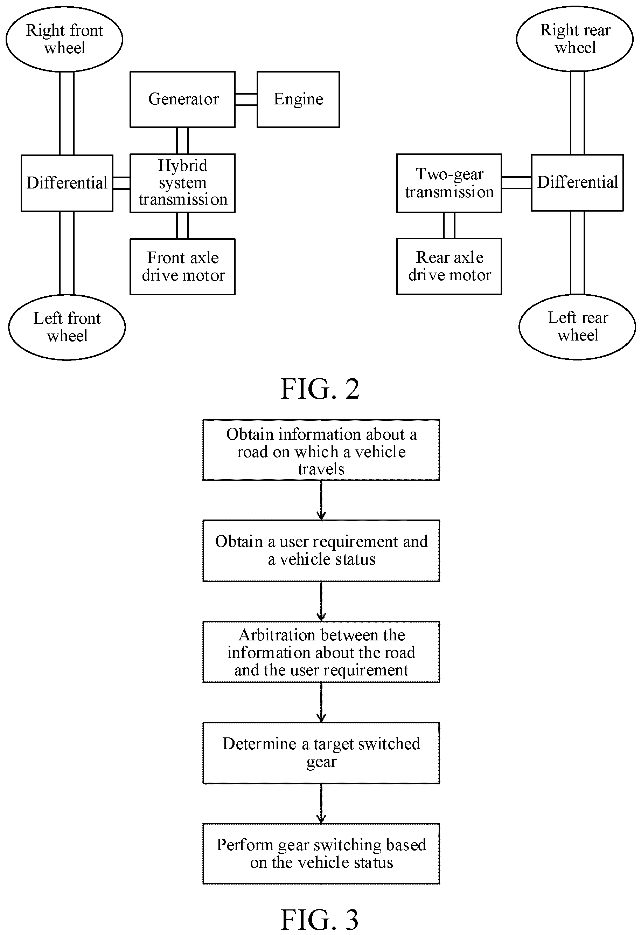

FIG. 2 is a schematic architectural diagram of a hybrid system according to an exemplary embodiment. As shown in FIG. 2, a four-wheel drive vehicle includes a front axle and a rear axle. The front axle is connected to two front wheels, namely, a left front wheel and a right front wheel, through a differential. The rear axle is connected to two rear wheels, namely, a left rear wheel and a right rear wheel, through a differential.

A front axle drive part may include: an engine, a generator, a front axle drive motor, and a transmission of the hybrid system. The front axle drive motor may be a single-gear drive motor. A rear axle drive part may include: a rear axle drive motor and a two-gear transmission. The rear axle drive motor may be a multiple-gear (P4) drive motor.

In the related art, for the rear axle drive part, the two-gear transmission controls the rear axle drive motor by using a fixed transmission ratio. Therefore, the rear axle drive motor is equivalent to a single-gear drive motor. However, in the embodiments of the present disclosure, gear control of the rear axle drive motor is added.

Further, in the embodiments of the present disclosure, a gear of a rear drive of the four-wheel drive vehicle may include: a first gear, a second gear, and a third gear. The gear of the rear drive of the four-wheel drive vehicle may be understood as a gear of the rear axle drive motor.

The first gear may be an N gear. When the rear drive of the four-wheel drive vehicle is in the N gear, it represents that a torque requirement is low. In this case, the front axle drive motor outputs a torque, and the rear axle drive motor does not output a torque. A drive requirement of a vehicle is satisfied by the front axle drive motor, so that drag torques and electrical losses of a rear axle reducer and the rear axle drive motor can be reduced, thereby improving economy of the vehicle and a battery range.

The second gear may be a high-speed gear. When the rear drive of the four-wheel drive vehicle is in the high-speed gear, both the front axle drive motor and the rear axle drive motor continuously output torques, so that dynamics and handling stability of the vehicle can be improved.

The third gear may be a low-speed gear. When the rear drive of the four-wheel drive vehicle is in the low-speed gear, both the front axle drive motor and the rear axle drive motor output torques, and the torque output by the rear axle drive motor is a high torque (a torque that is higher than the torque output in the high-speed gear and can satisfy a torque requirement of a special travel road), so that the dynamics and passability of the vehicle can be improved.

Further, the rear axle drive motor outputs no torque in the first gear, and the torque output by the rear axle drive motor in the second gear is less than the torque output by the rear axle drive motor in the third gear.

In addition, the torque output by the rear axle drive motor in the second gear may also be understood as being less than a preset torque. Moreover, the torque output by the rear axle drive motor in the third gear may also be understood as being greater than the preset torque. The preset torque may be greater than 0, and the preset torque may be used as a gear dividing line between the second gear and the third gear. If the torque output by the rear axle drive motor is greater than the preset torque, the rear axle drive motor is in the third gear. If the torque output by the rear axle drive motor is less than the preset torque, the rear axle drive motor is in the second gear.

In an optional implementation, that a gear of a rear drive of a four-wheel drive vehicle is controlled based on the travel road information and/or the driving mode may include: a target gear is determined from the first gear, the second gear, and the third gear based on the travel road information and/or the driving mode, and the gear of the rear drive of the four-wheel drive vehicle is controlled to be the target gear.

In the embodiments of the present disclosure, the travel road information may indicate a travel road type of the four-wheel drive vehicle. Therefore, implementations of step S 12 is described below by using the travel road type and/or the driving mode indicated by the travel road information.

In an optional implementation, the gear of the rear drive of the four-wheel drive vehicle may be controlled based on the travel road type. Correspondingly, step S12 may include: a target gear is determined from a second gear and a third gear if the travel road type matches a target travel road type, and the gear of the rear drive of the four-wheel drive vehicle is controlled to be the target gear.

In some embodiments, the target travel road type may be the special road type in the foregoing embodiment, namely, any one of snow, sand, mountains, mud, wades, and rocks.

It may be understood that if the four-wheel drive vehicle travels on these special roads, the four-wheel drive vehicle requires a large torque output by a motor. If only the front axle drive motor outputs the torque, the requirement cannot be satisfied, and various problems is even prone to occur. Therefore, in this case, it is necessary to ensure that the rear axle drive motor outputs the torque, and then the target gear is determined from the second gear and the third gear.

In an optional implementation, determining the target gear from the second gear and the third gear includes: the second gear is determined as the target gear if the target travel road type is snow or mud; or the third gear is determined as the target gear if the target travel road type is any one of sand, mountains, and rocks.

It may be understood that if the travel road type is the snow or the mud, and the vehicle needs to escape, an excessively large torque is not required. Therefore, the rear axle drive motor can run in the high-speed gear, thereby improving the dynamics and the handling stability of the vehicle.

If the travel road type is any one of the sand, the mountains, and the rocks, and the vehicle needs to escape, an excessively large torque is required. Therefore, the rear axle drive motor may run in the low-speed gear, thereby improving off-road performance and an escape capability of the vehicle.

Based on the travel road type, an output torque requirement of the rear axle drive motor is determined, so that a gear meeting the output torque requirement can be determined effectively and accurately. In this way, the dynamics and the handling stability of the vehicle are improved while the escape requirement is ensured, the drag losses are reduced, and the off-road performance is improved.

In an optional implementation, the gear of the rear drive of the four-wheel drive vehicle may be controlled based on the driving mode. Correspondingly, step S12 may include: a second gear is determined as the target gear if the driving mode is a sport mode, a torque output by the rear axle drive motor in the second gear being less than a preset torque.

In this implementation, the driving mode is the sport mode, which indicates a high requirement for power and a need for continuous torque output. In this case, the rear axle drive motor can continuously output a power torque, to satisfy a driving requirement of high power, so that the four-wheel drive vehicle can travel at a high speed, thereby improving the dynamics and the handling stability of the vehicle.

Based on the driving mode, the output torque requirement of the rear axle drive motor is determined, so that the gear meeting the output torque requirement can be determined effectively and accurately. In this way, the dynamics and the handling stability of the vehicle are improved while the escape requirement is ensured, the drag losses are reduced, and the off-road performance is improved.

In a third optional implementation, the gear of the rear drive of the four-wheel drive vehicle may be controlled based on the travel road information and the driving mode. Correspondingly, step S12 may include: a target gear is determined from a first gear and a second gear if the travel road type does not match a target travel road type, and the driving mode is an energy saving mode or a standard driving mode, and the gear of the rear drive of the four-wheel drive vehicle is controlled to be the target gear.

In this implementation, because the travel road type does not match the target travel road type, and the driving mode is the energy saving mode or the standard driving mode, the torque output by the rear axle motor is not required to be excessively large. Therefore, a more economical gear may be selected from the first gear and the second gear as the target gear, to improve the dynamics and the handling stability of the vehicle while power losses are reduced.

In the embodiments of the present disclosure, a principle of determining the target gear may be an economical principle. Economy of the gear can be evaluated by using a vehicle electric drive loss power. The vehicle electric drive loss power may be understood as a loss power of a motor drive system of the vehicle.

**EP 4 596 285 A1**

Therefore, in an optional implementation, a first vehicle electric drive loss power of the four-wheel drive vehicle in the first gear is determined; a second vehicle electric drive loss power of the four-wheel drive vehicle in the second gear is determined. Correspondingly, determining the target gear from the first gear and the second gear includes: the target gear is determined from the first gear and the second gear based on the first vehicle electric drive loss power and the second vehicle electric drive loss power.

In some embodiments, the first vehicle electric drive loss power and the second vehicle electric drive loss power may be loss powers at corresponding vehicle speeds.

In an optional implementation, the first vehicle electric drive loss power is determined based on front axle information and a vehicle motor drive-required torque. The front axle information includes: a rotational speed of the front axle drive motor, efficiency of the front axle drive motor, and a reduction ratio of a front axle.

It may be understood that, in the first gear, because the rear axle drive motor outputs no torque, the rear axle motor maintains a stationary state without loss such as a drag during travel of the vehicle, and a total required torque for drive of the vehicle motor is output by the front axle drive motor.

For example, the first vehicle electric drive loss power may be represented as:

$$P_{lossN} = P_{lossF} = \frac{T_{\text{Req}} \times n_F}{9550 \times i_F} \times (1 - \eta_F)$$

$P_{lossN}$ represents a loss power in the N gear (namely, the first gear), $P_{lossF}$ represents a loss power of the front axle drive motor, $T_{\text{Req}}$ represents a motor drive-required torque of the vehicle, $n_F$ represents a rotational speed of the front axle drive motor, $\eta_F$ represents efficiency of the front axle drive motor, and $i_F$ represents a reduction ratio of a front axle.

In this implementation, based on the front axle information and the motor drive-required torque of the vehicle, the first vehicle electric drive loss power can be determined effectively and accurately.

In an optional implementation, that a second vehicle electric drive loss power of the four-wheel drive vehicle in the second gear is determined includes: the second vehicle electric drive loss power is determined based on front axle information, rear axle information, torque requirement ratio, and a vehicle motor drive-required torque. The front axle information includes: a rotational speed of the front axle drive motor, efficiency of the front axle drive motor, and a reduction ratio of a front axle. The rear axle information includes: a rotational speed of a rear axle drive motor, efficiency of the rear axle drive motor, and a reduction ratio of a rear axle. The torque requirement ratio is a ratio of a torque allocated to the front axle drive motor to the vehicle motor drive-required torque.

It may be understood that, in the second gear, during travel of the vehicle, a rotational speed of a rear motor is synchronous with a vehicle speed, and the torques are output based on torque allocation requirements of the front and rear axle motors. The total required torque of the motor drive of the vehicle is output jointly by the front axle drive motor and the rear axle drive motor.

For example, the second vehicle electric drive loss power may be represented as:

$$P_{lossH} = (P_{lossF} + P_{lossR})$$

$$= \left( \frac{factor \times T_{\text{Req}} \times n_F}{9550 \times i_F} \times (1 - \eta_F) + \frac{(1 - factor) \times T_{\text{Req}} \times n_R}{9550 \times i_R} \times (1 - \eta_R) \right)$$

$P_{lossH}$ represents a loss power in a high-speed gear (namely, the second gear), $P_{lossF}$ represents a loss power of the front axle drive motor, $n_F$ represents a rotational speed of the front axle drive motor, $n_F$ represents efficiency of the front axle drive motor, $i_F$ represents a reduction ratio of the front axle, $P_{lossR}$ represents a loss power of the rear axle drive motor, $n_R$ represents a rotational speed of the rear axle drive motor, $\eta_R$ represents efficiency of the rear axle drive motor, $i_R$ represents a reduction ratio of the rear axle, *factor* represents a torque requirement ratio, and $T_{\text{Req}}$ represents a motor drive-required torque of the vehicle.

In the foregoing implementation, the rotational speed of the front axle drive motor and the rotational speed of the rear axle drive motor may be determined based on the vehicle speed. Generally, there is a corresponding correspondence between the vehicle speed and the rotational speed of the motor. Based on the correspondence, when the vehicle speed is known, the corresponding rotational speed can be determined.

In addition, for some other information, for example, the efficiency, the reduction ratio, and the like may be understood as known parameters, and can be directly obtained.

Through the foregoing implementation, the first vehicle electric drive loss power and the second vehicle electric drive loss power can be determined effectively and accurately, so that the more economical gear can be determined, based on two powers, from the first gear and the second gear as the target gear.

10

Further, that the target gear is determined from the first gear and the second gear based on the first vehicle electric drive loss power and the second vehicle electric drive loss power may include: the second gear is determined as the target gear if the first vehicle electric drive loss power is greater than the second vehicle electric drive loss power; or the first gear is determined as the target gear if the first vehicle electric drive loss power is less than or equal to the second vehicle electric drive loss power.

In this implementation, a gear in which the electric drive loss power of the vehicle is smaller is determined as the target gear, so that the economy of the target gear is higher.

In some embodiments, in addition to considering the electric drive loss power of the vehicle, whether the output torque of the front axle drive motor satisfies the motor drive-required torque of the entire may be further considered, and the target gear is determined based on the two aspects.

Therefore, in an optional implementation, determining the target gear from the first gear and the second gear based on the first vehicle electric drive loss power and the second vehicle electric drive loss power may include: the target gear is determined from the first gear and the second gear based on the first vehicle electric drive loss power, the second vehicle electric drive loss power, a maximum output torque of the front axle drive motor, and a vehicle motor drive-required torque.

The maximum output torque of the front axle drive motor is a known parameter of the front axle drive motor, and can be directly obtained.

In an optional implementation, the first gear is determined as the target gear if the first vehicle electric drive loss power is less than or equal to the second vehicle electric drive loss power, and the vehicle motor drive-required torque and the maximum output torque of the front axle drive motor satisfy a preset relationship; or the second gear is determined as the target gear if the first vehicle electric drive loss power is greater than the second vehicle electric drive loss power, and the vehicle motor drive-required torque and the maximum output torque of the front axle drive motor do not satisfy a preset relationship.

In some embodiments, the preset relationship is any one of the following: the vehicle motor drive-required torque is less than or equal to the maximum output torque of the front axle drive motor; or the vehicle motor drive-required torque is less than or equal to a difference between the maximum output torque of the front axle drive motor and the preset torque, the preset torque being a torque required when a drive motor is switched.

In some embodiments, the preset torque is used for indicating a torque required when the drive motor is switched. The torque is considered, so that a late response during gear switching of the rear axle drive motor can be avoided.

Therefore, the foregoing gear determining process may be represented as: when $P_{lossN} \leq P_{lossH}$ and $T_{Req} \leq (T_{Fwhole} - \Delta t)$, the target gear is the N gear; and when $P_{lossN} > P_{lossH}$ or $T_{Req} > (T_{Fwhole} - \Delta t)$, the target gear is the high-speed gear. $T_{Fwhole}$ represents a maximum output torque of the front axle drive motor, and represents a preset torque. $\Delta t$ may also be referred to as a reserved response torque. For meanings of other parameters, refer to the foregoing embodiments.

Through this implementation, based on the relationship between the motor drive-required torque of the vehicle and the maximum output torque of the front axle drive motor, a more proper target gear can be determined, so that the target gear can satisfy both an economical requirement and the torque requirement.

In another optional implementation, that the gear of the rear drive of the four-wheel drive vehicle is controlled based on the travel road information and the driving mode may include: the second gear is determined as the target gear if the travel road type does not match the target travel road type, and the driving mode is the sport mode, and the gear of the rear drive of the four-wheel drive vehicle is controlled to be the target gear.

In this implementation, if the travel road type does not match the target travel road type, and the driving mode is the sport mode, it represents that a power requirement is high, and there is no escape requirement, so that continuous torque output is required, and in this case, the second gear may be determined as the target gear. In this way, the rear axle drive motor can continuously output a power torque, to satisfy a driving requirement of high power, so that the four-wheel drive vehicle can travel at a high speed, thereby improving the dynamics and the handling stability of the vehicle.

In step S12, after the target gear is determined, gear switching control may be performed based on a vehicle status, to implement more stable gear switching control. For example, if the vehicle speed is high, the vehicle speed may be reduced first, and then gear switching is performed to reduce the danger.

FIG. 3 is a flowchart of control of a four-wheel drive vehicle according to an exemplary embodiment. As shown in FIG. 3, information about a road on which the vehicle travels is first obtained, and a user requirement and a vehicle status are obtained. Then, a target switched gear is determined based on the information about the road and the user requirement. Finally, the gear switching is performed based on the vehicle status.

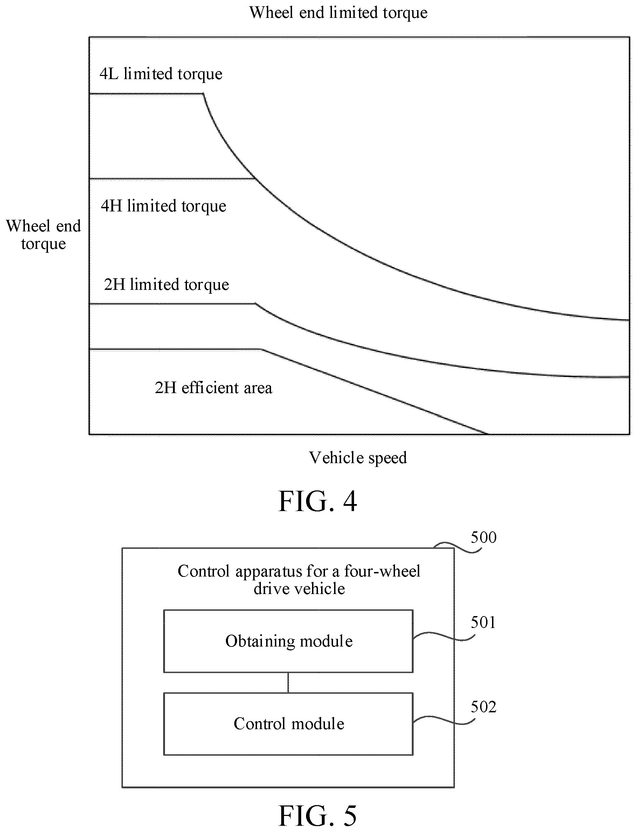

FIG. 4 is a schematic diagram of a relationship between a vehicle speed and a torque according to an exemplary embodiment. As shown in FIG. 4, three torques are involved: a 2H limited torque, a 4H limited torque, and a 4L limited torque. The 2H limited torque is a limited torque of the N gear, the 4H limited torque is a limited torque of the high-speed gear, and the 4L limited torque is a limited torque of the low-speed gear. It may be seen that the limited torque of the low gear is the largest. In addition, for the N gear, there is an efficient range. Within the efficient range, the loss power is small, and the efficiency is high.

Therefore, in an application scenario, the gear of the rear axle drive motor is adjusted based on a travel road type and a driver requirement. In a case that power requirements are relatively low on ordinary urban roads, the rear axle drive motor is controlled to enter the N gear, namely, a 2H drive mode. In this case, the front axle drive motor satisfies a drive requirement of the vehicle, drag torques and electrical losses of a rear axle reducer and the rear drive motor are reduced, and the economy and the battery range of the vehicle are improved. In working conditions such as large power requirements on urban roads or a special terrain of snow, the rear axle drive motor is controlled to enter the high-speed gear, namely, a 4H drive mode. In this case, both the front axle drive motor and the rear axle drive motor output to satisfy the drive requirement of the vehicle, to improve the dynamics and the handling stability of the vehicle. In some working conditions of special terrains (such as the mountains, the rocks, and the sand), the rear axle drive motor is controlled to enter the low-speed gear, namely, a 4L drive mode. In this case, both the front axle drive motor and the rear axle drive motor output to satisfy the drive requirement of the vehicle, and the rear axle can provide high torque output, thereby improving the dynamics and the passability of the vehicle.

It may be seen from the descriptions of the embodiments of the present disclosure that, in the technical solution in the embodiments of the present disclosure, optimal gear control of a rear axle drive motor of a four-wheel drive vehicle can be implemented; based on that the rear axle drive motor is completely mechanically connected to the wheels, and there are technical problems such as drag losses and poor economy, loss powers of different target gears are calculated, and the lowest loss is selected for target gear control in comparison; and connection and disconnection of the rear axle drive motor with the gear (that is, a low-speed gear) control are automatically controlled, to reduce system losses, and improve the economy and the battery range.

In addition, the gear is automatically adjusted based on a travel road type, to increase power output. When the vehicle enters a special travel road type, a conventional drive mode has technical problems such as that the gear is mainly switched by a driver manually, a road condition is complex in this case, and the driver responds slowly for observing and performing manual switching, and is prone to be distracted and may be in danger. Through automatic recognition of travel road types and based on automatic adjustment of a drive mode, the economy, handling stability, and an escape capability of the vehicle are improved.

Based on the same concept, the present disclosure further provides a control apparatus for a four-wheel drive vehicle. FIG. 5 is a block diagram of a control apparatus for a four-wheel drive vehicle according to an exemplary embodiment. As shown in FIG. 5, a control apparatus 500 for a four-wheel drive vehicle may include:

an obtaining module 501, configured to: obtain travel road information and/or a driving mode of a four-wheel drive vehicle; and
a control module 502, configured to: control a gear of a rear drive of the four-wheel drive vehicle based on the travel road information and/or the driving mode, where in different gears, a rear axle drive motor of the four-wheel drive vehicle outputs different torques.

Optionally, the gear of the rear drive of the four-wheel drive vehicle includes: a first gear, a second gear, and a third gear.

The rear axle drive motor outputs no torque in the first gear, and a torque output by the rear axle drive motor in the second gear is less than a torque output by the rear axle drive motor in the third gear.

Optionally, the travel road information is used for indicating a travel road type of the four-wheel drive vehicle, and the control module 502 is further configured to:
determine a target gear from a second gear and a third gear if the travel road type matches a target travel road type, and control the gear of the rear drive of the four-wheel drive vehicle to be the target gear.

A torque output by the rear axle drive motor in the second gear is less than a torque output by the rear axle drive motor in the third gear.

Optionally, the obtaining module 502 is further configured to: determine the second gear as the target gear if the target travel road type is snow or mud; or
determine the third gear as the target gear if the target travel road type is any one of sand, mountains, and rocks.

Optionally, the obtaining module 502 is further configured to: determine a second gear as the target gear if the driving mode is a sport mode, a torque output by the rear axle drive motor in the second gear being less than a preset torque.

Optionally, the obtaining module 502 is further configured to: determine a target gear from a first gear and a second gear if the travel road type does not match a target travel road type, and the driving mode is an energy saving mode or a standard driving mode, and control the gear of the rear drive of the four-wheel drive vehicle to be the target gear.

The rear axle drive motor outputs no torque in the first gear, and a torque output by the rear axle drive motor in the second gear is less than a preset torque.

Optionally, the control module 502 is further configured to: determine a first vehicle electric drive loss power of the four-wheel drive vehicle in the first gear; and determine a second vehicle electric drive loss power of the four-wheel drive vehicle in the second gear; and is further configured to: determine the target gear from the first gear and the second gear based on the first vehicle electric drive loss power and the second vehicle electric drive loss power.

Optionally, the obtaining module 502 is further configured to: determine the first vehicle electric drive loss power based on front axle information and a vehicle motor drive-required torque. The front axle information includes: a rotational speed of the front axle drive motor, efficiency of the front axle drive motor, and a reduction ratio of a front axle.

Optionally, the obtaining module 502 is further configured to: determine the second vehicle electric drive loss power based on front axle information, rear axle information, a torque requirement ratio, and a vehicle motor drive-required torque. The front axle information includes: a rotational speed of the front axle drive motor, efficiency of the front axle drive motor, and a reduction ratio of a front axle. The rear axle information includes: a rotational speed of a rear axle drive motor, efficiency of the rear axle drive motor, and a reduction ratio of a rear axle. The torque requirement ratio is a ratio of a torque allocated to the front axle drive motor to the vehicle motor drive-required torque.

Optionally, the obtaining module 502 is further configured to: determine the second gear as the target gear if the first vehicle electric drive loss power is greater than the second vehicle electric drive loss power; or determine the first gear as the target gear if the first vehicle electric drive loss power is less than or equal to the second vehicle electric drive loss power.

Optionally, the obtaining module 502 is further configured to: determine the target gear from the first gear and the second gear based on the first vehicle electric drive loss power, the second vehicle electric drive loss power, a maximum output torque of the front axle drive motor, and a vehicle motor drive-required torque.

Optionally, the obtaining module 502 is further configured to: determine the first gear as the target gear if the first vehicle electric drive loss power is less than or equal to the second vehicle electric drive loss power, and the vehicle motor drive-required torque and the maximum output torque of the front axle drive motor satisfy a preset relationship; or determine the second gear as the target gear if the first vehicle electric drive loss power is greater than the second vehicle electric drive loss power, and the vehicle motor drive-required torque and the maximum output torque of the front axle drive motor do not satisfy a preset relationship.

Optionally, the preset relationship is any one of the following:

the vehicle motor drive-required torque is less than or equal to the maximum output torque of the front axle drive motor; or

the vehicle motor drive-required torque is less than or equal to a difference between the maximum output torque of the front axle drive motor and a preset torque, the preset torque being a torque required when a drive motor is switched.

Optionally, the obtaining module 502 is further configured to: determine a second gear as the target gear if the travel road type does not match a target travel road type, and the driving mode is a sport mode, and control the gear of the rear drive of the four-wheel drive vehicle as the target gear, a torque output by the rear axle drive motor in the second gear being less than a preset torque.

Optionally, the obtaining module 501 is further configured to: obtain vehicle status information of the four-wheel drive vehicle;

obtain first information input by a user, the first information including: at least one piece of required driving mode information, required travel road information, and required torque information;

obtain second information collected by an information collection apparatus, the second information including: a travel road image and/or the travel road type; and

determine the travel road information and/or the driving mode based on at least one piece of the vehicle status information, the first information, and the second information.

Optionally, the obtaining module 501 is further configured to: determine the travel road information based on the travel road image, the travel road type, the required travel road information, and the required torque; and determine the driving mode based on the required driving mode and the required torque.

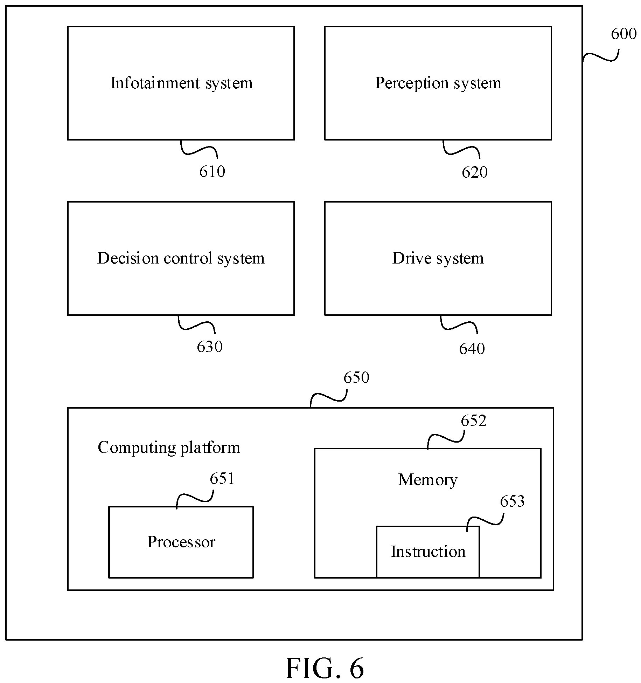

FIG. 6 is a schematic block diagram of functions of a vehicle according to an exemplary embodiment. A vehicle 600 may include various subsystems, for example, an infotainment system 610, a perception system 620, a decision control system 630, a drive system 640, and a computing platform 650. The vehicle 600 may alternatively include more or fewer subsystems, and each subsystem may include multiple components. In addition, each subsystem and each component of the vehicle 600 may be interconnected in a wired or wireless manner.

In some embodiments, the infotainment system 610 may include a communication system, an entertainment system, a navigation system, and the like.

The perception system 620 may include several types of sensors configured to sense information about an environment surrounding the vehicle 600. For example, the perception system 620 may include a global positioning system (the global positioning system may be the GPS system, the BeiDou system, or another positioning system), an inertial measurement unit (IMU), a lidar, a millimeter wave radar, an ultrasonic radar, and a photographing apparatus.

The decision control system 630 may include a computing system, a vehicle controller, a steering system, an accelerator, and a braking system.

The drive system 640 may include components for providing power for the vehicle 600 for movement. In an embodiment, the drive system 640 may include an engine, an energy source, a transmission system, and wheels. The engine may be one or a combination of multiple of an internal combustion engine, a motor, and an air compression engine. The engine can convert energy provided by the energy source into mechanical energy.

Some or all functions of the vehicle 600 are controlled by the computing platform 650. The computing platform 650 may include at least one processor 651 and a memory 652. The processor 651 may execute instructions 653 stored in the memory 652.

The processor 651 may be any conventional processor, such as a commercially available CPU. The processor may further include, for example, a graphics processing unit (GPU), a field programmable gate array (FPGA), a system on chip (SoC), an application-specific integrated circuit (ASIC), or a combination thereof.

The memory 652 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

In addition to the instructions 653, the memory 652 may further store data, for example, a road map, route information, and a location, a direction, and a speed of the vehicle. The data stored in the memory 652 may be used by the computing platform 650.

In this embodiment of the present disclosure, the processor 651 may execute the instructions 653, to complete all or some of the steps of the control method for a four-wheel drive vehicle.

In another exemplary embodiment, a controller is further provided. The controller may be a part of the foregoing vehicle. The controller may be an integrated circuit (IC) or a chip, where the integrated circuit may be one IC or may be a set of multiple ICs. The chip may include, but is not limited to, the following types: a graphics processing unit (GPU), a central processing unit (CPU), a field programmable logic array (FPGA), a digital signal processor (DSP), an application-specific integrated circuit (ASIC), a system on chip (SoC), and the like. The integrated circuit or the chip may be configured to execute executable instructions (or code), to implement the control method for a four-wheel drive vehicle. The executable instructions may be stored in the integrated circuit or the chip, or may be obtained from another apparatus or device. For example, the integrated circuit or the chip includes a processor, a memory, and an interface configured to communicate with another apparatus. The executable instructions may be stored in the memory, and when the executable instructions are executed by the processor, the control method for a four-wheel drive vehicle is implemented; or the integrated circuit or the chip may receive the executable instructions through the interface, and transmit the executable instructions to the processor for executing, to implement the control method for a four-wheel drive vehicle.

The present disclosure further provides a computer-readable storage medium, having computer program instructions stored therein. The program instructions, when executed by a processor, implement the steps of the control method for a four-wheel drive vehicle provided in the present disclosure.

In another exemplary embodiment, a computer program product is further provided. The computer program product includes a computer program executable by a programmable apparatus. The computer program has a code part that is used for performing the control method for a four-wheel drive vehicle when executed by the programmable apparatus.

The exemplary embodiments of the present disclosure are described in detail above with reference to the accompanying drawings, but the present disclosure is not limited to the specific details in the above embodiments. Various simple variations may be made to the technical solutions of the present disclosure within the scope of the technical idea of the present disclosure, and such simple variations shall all fall within the protection scope of the present disclosure.

In addition, it should be noted that the specific technical features described in the above specific implementations may be combined in any suitable manner without contradiction. To avoid unnecessary repetition, various possible combinations are not further described in the present disclosure.

In addition, the various implementations of the present disclosure may be combined without departing from the idea of the present disclosure, and such combinations shall also fall within the scope of the present disclosure.

**Claims**

1. A control method for a four-wheel drive vehicle, comprising:

    obtaining travel road information and/or a driving mode of the four-wheel drive vehicle; and
    controlling a gear of a rear drive of the four-wheel drive vehicle based on the travel road information and/or the driving mode, wherein in different gears, a rear axle drive motor of the four-wheel drive vehicle outputs different torques.

2. The control method according to claim 1, wherein the gear of the rear drive of the four-wheel drive vehicle comprises: a first gear, a second gear, and a third gear; and
the rear axle drive motor outputs no torque in the first gear, and a torque output by the rear axle drive motor in the second gear is less than a torque output by the rear axle drive motor in the third gear.

3. The control method according to claim 1, wherein the travel road information is used for indicating a travel road type of the four-wheel drive vehicle, and controlling the gear of the rear drive of the four-wheel drive vehicle based on the travel road information comprises:

determining a target gear from a second gear and a third gear if the travel road type matches a target travel road type, and controlling the gear of the rear drive of the four-wheel drive vehicle to be the target gear,
wherein a torque output by the rear axle drive motor in the second gear is less than a torque output by the rear axle drive motor in the third gear.

4. The control method according to claim 3, wherein determining the target gear from the second gear and the third gear comprises:

determining the second gear as the target gear if the target travel road type is snow or mud; or
determining the third gear as the target gear if the target travel road type is any one of sand, mountains, and rocks.

5. The control method according to claim 1, wherein controlling the gear of the rear drive of the four-wheel drive vehicle based on the driving mode comprises:
determining a second gear as a target gear if the driving mode is a sport mode, a torque output by the rear axle drive motor in the second gear being less than a preset torque.

6. The control method according to claim 1, wherein the travel road information is used for indicating a travel road type of the four-wheel drive vehicle, and controlling the gear of the rear drive of the four-wheel drive vehicle based on the travel road information and the driving mode comprises:

determining a target gear from a first gear and a second gear if the travel road type does not match a target travel road type, and the driving mode is an energy saving mode or a standard driving mode, and controlling the gear of the rear drive of the four-wheel drive vehicle to be the target gear,
the rear axle drive motor outputting no torque in the first gear, and a torque output by the rear axle drive motor in the second gear being less than a preset torque,
preferably further comprising:

determining a first vehicle electric drive loss power of the four-wheel drive vehicle in the first gear; and
determining a second vehicle electric drive loss power of the four-wheel drive vehicle in the second gear,
determining the target gear from the first gear and the second gear comprising:
determining the target gear from the first gear and the second gear based on the first vehicle electric drive loss power and the second vehicle electric drive loss power.

7. The control method according to claim 6, wherein determining the first vehicle electric drive loss power of the four-wheel drive vehicle in the first gear comprises:
determining the first vehicle electric drive loss power based on front axle information and a vehicle motor drive-required torque, the front axle information comprises: a rotational speed of a front axle drive motor, efficiency of the front axle drive motor, and a reduction ratio of a front axle.

8. The control method according to claim 6, wherein determining the second vehicle electric drive loss power of the four-wheel drive vehicle in the second gear comprises:
determining the second vehicle electric drive loss power based on front axle information, rear axle information, a torque requirement ratio, and a vehicle motor drive-required torque, the front axle information comprises: a rotational speed of a front axle drive motor, efficiency of the front axle drive motor, and a reduction ratio of a front axle, the rear axle information comprises: a rotational speed of the rear axle drive motor, efficiency of the rear axle drive motor, and a reduction ratio of a rear axle, and the torque requirement ratio being a ratio of a torque allocated to the front axle drive motor to the vehicle motor drive-required torque.

9. The control method according to claim 6, wherein determining the target gear from the first gear and the second gear based on the first vehicle electric drive loss power and the second vehicle electric drive loss power comprises:

determining the second gear as the target gear if the first vehicle electric drive loss power is greater than the second vehicle electric drive loss power; or
determining the first gear as the target gear if the first vehicle electric drive loss power is less than or equal to the second vehicle electric drive loss power.

10. The control method according to claim 6, wherein determining the target gear from the first gear and the second gear based on the first vehicle electric drive loss power and the second vehicle electric drive loss power comprises:

determining the target gear from the first gear and the second gear based on the first vehicle electric drive loss power, the second vehicle electric drive loss power, a maximum output torque of a front axle drive motor, and a vehicle motor drive-required torque,
preferably wherein determining the target gear from the first gear and the second gear based on the first vehicle electric drive loss power, the second vehicle electric drive loss power, the maximum output torque of a front axle drive motor, and the vehicle motor drive-required torque comprises:

determining the first gear as the target gear if the first vehicle electric drive loss power is less than or equal to the second vehicle electric drive loss power, and the vehicle motor drive-required torque and the maximum output torque of the front axle drive motor satisfy a preset relationship; or
determining the second gear as the target gear if the first vehicle electric drive loss power is greater than the second vehicle electric drive loss power, and the vehicle motor drive-required torque and the maximum output torque of the front axle drive motor do not satisfy a preset relationship,
more preferably wherein the preset relationship is any one of the following:

the vehicle motor drive-required torque is less than or equal to the maximum output torque of the front axle drive motor; or
the vehicle motor drive-required torque is less than or equal to a difference between the maximum output torque of the front axle drive motor and the preset torque, the preset torque being a torque required when a drive motor is switched.

11. The control method according to claim 1, wherein the travel road information is used for indicating a travel road type of the four-wheel drive vehicle, and controlling the gear of the rear drive of the four-wheel drive vehicle based on the travel road information and the driving mode comprises:
determining a second gear as a target gear if the travel road type does not match a target travel road type, and the driving mode is a sport mode, and controlling the gear of the rear drive of the four-wheel drive vehicle as the target gear, a torque output by the rear axle drive motor in the second gear being less than a preset torque.

12. The control method according to any one of claims 1 to 11, wherein obtaining the travel road information and/or the driving mode of the four-wheel drive vehicle comprises:

obtaining vehicle status information of the four-wheel drive vehicle;
obtaining first information input by a user, the first information comprising: at least one piece of required driving mode information, required travel road information, and required torque information;
obtaining second information collected by an information collection apparatus, the second information comprising: a travel road image and/or the travel road type; and
determining the travel road information and/or the driving mode based on at least one piece of the vehicle status information, the first information, and the second information,
preferably wherein determining the travel road information and/or the driving mode based on at least one piece of the vehicle status information, the first information, and the second information comprises:

determining the travel road information based on the travel road image, the travel road type, the required travel road information, and the required torque; and
determining the driving mode based on the required driving mode and the required torque.

13. A controller, comprising:

a memory, having a computer program stored therein; and
a processor, configured to execute the computer program in the memory, to enable the controller to perform the control method for a four-wheel drive vehicle according to any one of claims 1 to 12.

14. A vehicle, comprising the controller according to claim 13.

15. A computer-readable storage medium, having computer program instructions stored therein, the program instructions, when executed by a processor, implementing the control method for a four-wheel drive vehicle according to any one of claims 1 to 12.

Obtain travel road information and/or a driving mode of a four-wheel drive vehicle ⟋ S11

Control a gear of a rear drive of a four-wheel drive vehicle based on the travel road information and/or the driving mode ⟋ S12

FIG. 1

FIG. 2

FIG. 3

Wheel end limited torque

4L limited torque

Wheel end torque

4H limited torque

2H limited torque

2H efficient area

Vehicle speed

## FIG. 4

500

Control apparatus for a four-wheel drive vehicle

Obtaining module — 501

Control module — 502

## FIG. 5

600

| Infotainment system | Perception system |
|---|---|

610

620

| Decision control system | Drive system |
|---|---|

630

640

650

Computing platform

651

652

Memory

653

| Processor | Instruction |
|---|---|

FIG. 6

Europäisches
Patentamt

European
Patent Office

Office européen
des brevets

# EUROPEAN SEARCH REPORT

**Application Number**

EP 25 15 5416

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 246 402 A (GREAT WALL MOTOR CO LTD) 28 October 2022 (2022-10-28) * figures 1-2 * * paragraphs [0100] - [0103] * * the whole document * | 1-15 | INV. B60K6/442 B60K6/52 B60W10/08 B60W10/11 B60W20/30 |
| X | JP 2021 083251 A (MITSUBISHI MOTORS CORP) 27 May 2021 (2021-05-27) * figures 1,3-4 * * paragraphs [0024], [0028], [0032] - [0033] * * the whole document * | 1-15 | B60W50/08 B60K1/02 B60K6/547 ADD. B60K1/00 |
| X | FR 3 067 665 A1 (VALEO EQUIP ELECTR MOTEUR [FR]) 21 December 2018 (2018-12-21) * figures 1-2 * * page 8, lines 1-6 * * the whole document * | 1-15 | |
| A | US 2017/050536 A1 (MARTIN MICHAEL [AT]) 23 February 2017 (2017-02-23) * figures 1-4,11,13-18 * * the whole document * | 1,13-15 | |
| A | US 2021/276529 A1 (HAN LINGTAO [CN] ET AL) 9 September 2021 (2021-09-09) * figures 1-4 * * the whole document * | 1,13-15 | TECHNICAL FIELDS SEARCHED (IPC) B60K B60W |

The present search report has been drawn up for all claims

| Place of search | Date of completion of the search | Examiner |
|---|---|---|
| Munich | 11 June 2025 | Dubreuil, Cédric |

EPO FORM 1503 03.82 (P04C01)

**EP 4 596 285 A1**

## ANNEX TO THE EUROPEAN SEARCH REPORT
## ON EUROPEAN PATENT APPLICATION NO.

EP 25 15 5416

11-06-2025

| Patent document cited in search report | | Publication date | Patent family member(s) | | Publication date |
|---|---|---|---|---|---|
| CN 115246402 | A | 28-10-2022 | NONE | | |
| JP 2021083251 | A | 27-05-2021 | JP | 7404803 B2 | 26-12-2023 |
| | | | JP | 2021083251 A | 27-05-2021 |
| FR 3067665 | A1 | 21-12-2018 | FR | 3067665 A1 | 21-12-2018 |
| | | | WO | 2018229212 A1 | 20-12-2018 |
| US 2017050536 | A1 | 23-02-2017 | CN | 106564404 A | 19-04-2017 |
| | | | EP | 3132966 A1 | 22-02-2017 |
| | | | US | 2017050536 A1 | 23-02-2017 |
| US 2021276529 | A1 | 09-09-2021 | CN | 107161151 A | 15-09-2017 |
| | | | US | 2021276529 A1 | 09-09-2021 |
| | | | WO | 2018196827 A1 | 01-11-2018 |